# EUROPEAN PATENT APPLICATION

(11) **EP 4 489 259 A1**
(43) Date of publication of application: **08.01.2025**
(21) Application number: 24184159.2
(22) Date of filing: 25.06.2024
(51) Int. Cl.: H02J 7/00

(54) **CHARGING APPARATUS SUPPORTING A BIDIRECTIONAL SWITCHING CIRCUIT**

(30) Priority: 05.07.2023 CN 202321738140 U
(71) Applicant: Xiexun Electronic (Jian) Co., Ltd, Jian City Jiangxi Province 343100 (CN)
(72) Inventor: CHEN, Huibin, Jian City, Jiangxi Province 343100 (CN); WANG, Shaopu, Jian City, Jiangxi Province 343100 (CN); YIN, Wenliang, Jian City, Jiangxi Province 343100 (CN); ZHANG, Wuhua, Jian City, Jiangxi Province 343100 (CN)
(74) Representative: Carangelo, Pierluigi

(57) **Abstract**

Provided is a charging apparatus supporting a bidirectional switching circuit. The apparatus includes a connector housing, a connection body, and a wire. The connector housing has a T-shaped structure. The bottom of the connector housing in a vertical direction is fixed to one end of the connection body. The wire is fixed to another end of the connector body. A Type-C interface is installed on one end of the connector housing. A lightning interface is installed on another end of the connector housing. A chip is installed inside the connector housing. The present disclosure can meet the needs of charging various types of device and can also achieve the saving and environmental protection to a certain extent.

## Description

### TECHNICAL FIELD

The present disclosure relates to the technical field of data lines, in particular, a charging apparatus supporting a bidirectional switching circuit.

### BACKGROUND

With the continuous development of society, the usage of electronic products is getting higher, and every aspect of life is inseparable from mobile phones. However, mobile phone brands are diverse in the market, and the battery life of mobile phones is the most widespread issue. Since the current main charging interfaces on the market include the Type-C interface and the Lightning (LTG) interface of Apple, different types of mobile phones cannot be charged with the same data line due to the data line models during use.

To solve the problem that the same data line cannot charge different types of mobile phones, a simple optimization solution is provided.

### SUMMARY

The technical solutions adopted by the present disclosure are as follows:

A charging apparatus supporting a bidirectional switching circuit includes a connector housing, a connection body, and a wire. The connector housing has a T-shaped structure. The bottom of the connector housing in a vertical direction is fixed to one end of the connection body. The wire is fixed to the other end of the connector body. A Type-C interface is installed on an end of the connector housing. A lightning interface is installed on another end of the connector housing. A chip is installed inside the connector housing. A transfer switch is disposed inside the connector housing and fixed to the chip.

In some embodiments, the chip 6 includes power supply pins, power switches, a transfer switch, LTG pins, Type-C pins, and various resistive elements. Five power supply pins are provided and are power supply pin 1, power supply pin 2, power supply pin 3, power supply pin 4, and power supply pin 5, respectively. Five LTG pins are provided and are LTG pin 1, LTG pin 2, LTG pin 3, LTG pin 4, and LTG pin 5, respectively. Five Type-C pins are provided and are Type-C pin 1, Type-C pin 2, Type-C pin 3, Type-C pin 4, and Type-C pin 5, respectively. Two power switches are provided, one power switch configured to control the LTG pins is Q1, and the other power switch configured to control the Type-C pins is Q2. Three resistive elements are provided and are resistor R1, resistor R2, and resistor R3, respectively. The transfer switch is a two-position three-way switch and is split into two independent portions of SW1A and SW1B. SW1B controls a CC signal to be connected to a Type-C pin or an LTG pin. The SW1A controls the power switches Q1 and Q2 to turn off or on.

In some embodiments, the power supply pin 1 is connected to the power switch Q1, the power switch Q1 is connected to the LTG pin 1, and the LTG pin 5 is grounded; the power supply pin 1 is connected to one end of the resistor R1, the other end of the resistor R1 is separately connected to a pin of the power switch Q1 and a pin of the portion SW1A of the transfer switch, the power supply pin 1 is connected to the power switch Q2, the power switch Q2 is connected to the Type-C pin 1, and the Type-C pin 5 is grounded; the power supply pin 1 is connected to one end of the resistor R3, the other end of the resistor R3 is separately connected to a pin of the power switch Q2 and a pin of SW1A, a pin of SW1A is connected to an end of the resistor R2, and the other end of the resistor R2 is grounded.

In some embodiments, the power supply pin 2 is separately connected to the LTG pin 3 and the Type-C pin 3.

In some embodiments, the power supply pin 3 is separately connected to the LTG pin 2 and the Type-C pin 2.

In some embodiments, the power supply pin 4 is connected to a pin of SW1B of the transfer switch, and another pin of SW1B of the transfer switch is separately connected to the LTG pin 4 and the Type-C pin 4.

In some embodiments, the power supply pin 4 is connected to a pin on one end of the transfer switch, pins on another end of the transfer switch are respectively connected to the Type-C pin 4, the LTG pin 4, the power switch Q2, and the power switch Q1 in sequence, another pin on the one end of the transfer switch is connected to an end of the resistor R2, and the other end of the resistor R2 is grounded.

The beneficial effects are as follows:
The present disclosure can achieve charging of different types of mobile phones by the design of the circuit, that is, the present disclosure can achieve charging of both an Android mobile phone and an Apple mobile phone. The charging interfaces of the Android mobile phone and the Apple mobile phone are combined into one data line so that the case where the data line is not universal can be avoided, making it convenient for users to charge phones.

The present disclosure can achieve environmental protection to a certain extent by implementing the dual use of a data line. Currently, charging lines on the market are diverse. With the combination of the charging interfaces of the Android mobile phone and the Apple mobile phone, the number of charging lines can be saved, and the production of plastic products can be reduced. Moreover, the environment can be protected to a certain extent, and people's environmental awareness can be enhanced.

### BRIEF DESCRIPTION OF DRAWINGS

FIG. 1 is a diagram illustrating the structure of the present disclosure.
FIG. 2 is a diagram illustrating the inner structure of the present disclosure.
FIG. 3 is a diagram illustrating the three-dimensional structure of the present disclosure.
FIG. 4 is a schematic diagram of a circuit of the present disclosure.
FIG. 5 is a schematic diagram of another connection manner of the circuit of the present disclosure.

### Reference list

1 connector housing
2 connection body
3 wire
4 lightning interface
5 Type-c interface
6 chip
7 transfer switch

### DETAILED DESCRIPTION

The present disclosure is further described below in conjunction with accompanying drawings of the description.

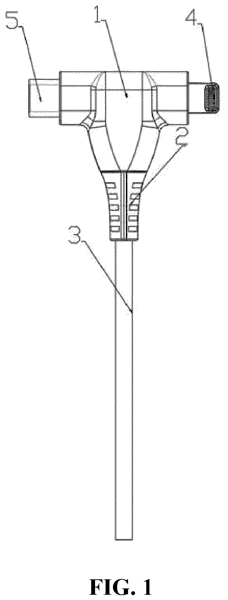

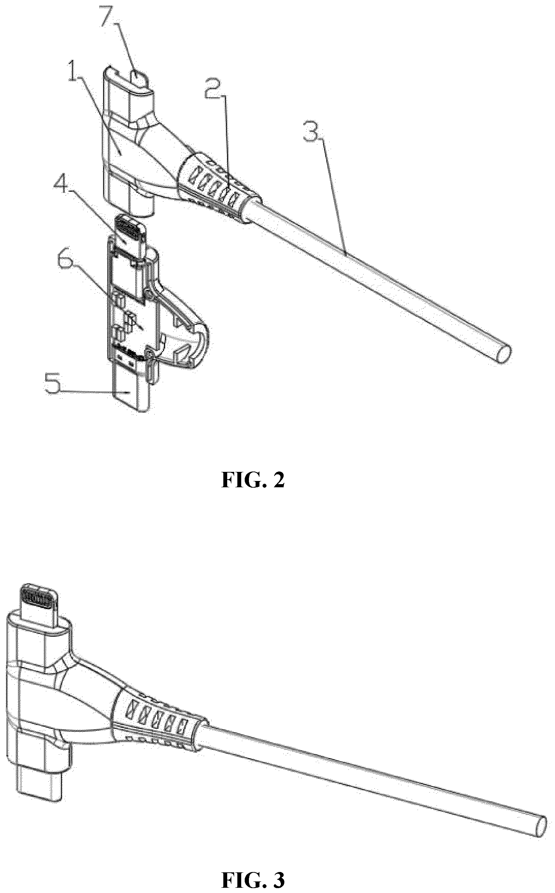

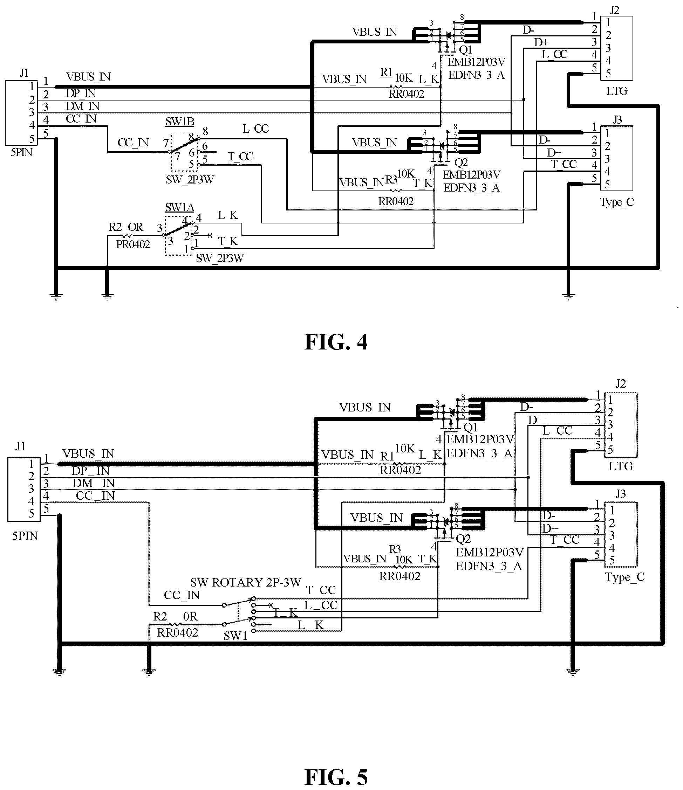

As shown in FIG. 1 to FIG. 4, a charging apparatus supporting a bidirectional switching circuit includes a connector housing 1, a connection body 2, and a wire 3; the connector housing 1 has a T-shaped structure, the bottom of the connector housing 1 in the vertical direction is fixed to one end of the connection body 2, and the wire 3 is fixed to the other end of the connector body 2; a Type-C interface 5 is installed on an end of the connector housing 1, a lightning interface is installed on another end of the connector housing 1, a chip 6 is installed inside the connector housing 1, and a transfer switch 7 is disposed inside the connector housing 1 and fixed to the chip 6.

The chip 6 includes power supply pins, power switches, a transfer switch, LTG pins, Type-C pins, and various resistive elements. Five power supply pins are provided and are power supply pin 1, power supply pin 2, power supply pin 3, power supply pin 4, and power supply pin 5, respectively. Five LTG pins are provided and are LTG pin 1, LTG pin 2, LTG pin 3, LTG pin 4, and LTG pin 5, respectively. Five Type-C pins are provided and are Type-C pin 1, Type-C pin 2, Type-C pin 3, Type-C pin 4, and Type-C pin 5, respectively. Two power switches are provided, one power switch configured to control the LTG pins is Q1, and the other power switch configured to control the Type-C pins is Q2. Three resistive elements are provided and are resistor R1, resistor R2, and resistor R3, respectively. The transfer switch is a two-position three-way switch and is split into two independent portions SW1A and SW1B. The portion SW1B controls a CC signal to be connected to a Type-C pin or an LTG pin. The portion SW1A controls the power switches Q1 and Q2 to turn off or on.

The power supply pin 1 is connected to the power switch Q1, the power switch Q1 is connected to the LTG pin 1, and the LTG pin 5 is grounded; the power supply pin 1 is connected to one end of the resistor R1, the other end of the resistor R1 is separately connected to the power switch Q1 and a pin of the portion SW1A of the transfer switch, the power supply pin 1 is connected to the power switch Q2, a pin of the power switch Q2 is connected to the Type-C pin 1, and the Type-C pin 5 is grounded; the power supply pin 1 is connected to an end of the resistor R3, the other end of the resistor R3 is separately connected to the power switch Q2 and a pin of the SW1A, another pin of SW1A is connected to an end of the resistor R2, and the other end of the resistor R2 is grounded.

In some embodiments, the power supply pin 2 is separately connected to the LTG pin 3 and the Type-C pin 3.

In some embodiments, the power supply pin 3 is separately connected to the LTG pin 2 and the Type-C pin 2.

In some embodiments, the power supply pin 4 is connected to a pin of SW1B of the transfer switch, and another pin of SW1B of the transfer switch is separately connected to the LTG pin 4 and the Type-C pin 4.

In some embodiments, the power supply pin 4 is connected to a pin on one end of the transfer switch, pins on another end of the transfer switch are connected to the Type-C pin 4, the LTG pin 4, the power switch Q2, and the power switch Q1 in sequence, a pin on the one end of the transfer switch is connected to one end of the resistor R2, and the other end of the resistor R2 is grounded.

The working principle is as follows:
A charging apparatus supporting a bidirectional switching circuit includes a connector housing 1, a connection body 2, a wire 3, a Lightning interface 4, and a Type-C interface 5. During use, a device that needs to be charged is inserted into a corresponding interface, and a transfer switch 7 is pushed to the corresponding charging interface so that charging of the corresponding device can be implemented while charging of the other opposite interface is blocked to ensure the one-way charging capability of the data line.

The working principle of the circuit diagram is as follows:

### Embodiment one

When a Type-C interface device needs to be charged, the device is connected to the Type-C interface 5, and then SW1B of the transfer switch is pushed to the Type-C position. In this case, the power supply pin inputs a CC signal to the Type-C pin 4, then the positive signal of the power supply pin 2 is input to the Type-C pin 3, and the negative signal of the power supply pin 3 is input to the Type-C pin 2. Then the power switch Q2 is enabled to charge the device at the Type-C interface. The same goes for charging an LTG device. Only the rotary switch SW ROTARY needs to be pushed to the LTG position to charge the LTG device.

The implementation manner described in the present disclosure does not constitute a limitation on the scope of the present application. Any modification that may be made by those skilled in the art within the principle of the concept of the present disclosure falls within the scope of the present disclosure.

## Claims

1. A charging apparatus supporting a bidirectional switching circuit, comprising: a connector housing (1), a connection body (2), and a wire (3), wherein the connector housing (1) has a T-shaped structure, a bottom of the connector housing in a vertical direction (1) is fixed to one end of the connection body (2), and the wire (3) is fixed to the other end of the connector body (2); wherein a Type-C interface (5) is installed on an end of the connector housing (1), a Lightning, LTG, interface is installed on another end of the connector housing (1), a chip (6) is installed inside the connector housing (1), and a transfer switch (7) is disposed inside the connector housing (1) and fixed to the chip (6).

2. The charging apparatus supporting a bidirectional switching circuit according to claim 1, wherein the chip (6) comprises a power supply pin, a power switch, a transfer switch, an LTG pin, a Type-C pin, and a resistive element.

3. The charging apparatus supporting a bidirectional switching circuit according to claim 2, wherein five power supply pins are provided and are power supply pin 1, power supply pin 2, power supply pin 3, power supply pin 4, and power supply pin 5, respectively.

4. The charging apparatus supporting a bidirectional switching circuit according to claim 3, wherein five LTG pins are provided, and the five LTG pins are LTG pin 1, LTG pin 2, LTG pin 3, LTG pin 4, and LTG pin 5, respectively.

5. The charging apparatus supporting a bidirectional switching circuit according to claim 4, wherein five Type-C pins are provided, and the five Type-C pins are Type-C pin 1, Type-C pin 2, Type-C pin 3, Type-C pin 4, and Type-C pin 5, respectively.

6. The charging apparatus supporting a bidirectional switching circuit according to claim 5, wherein three resistive elements are provided, and the three resistive elements are resistor R1, resistor R2, and resistor R3, respectively.

7. The charging apparatus supporting a bidirectional switching circuit according to claim 6, wherein two power switches are provided, a power switch of the two power switches configured to control the LTG pins is Q1, and the other power switch of the two power switches configured to control the power supply pins is Q2.

8. The charging apparatus supporting a bidirectional switching circuit according to claim 7, wherein the transfer switch is a two-position three-way switch and is split into two independent portions SW1A and SW1B, respectively, the portion SW1B controls a CC signal to be connected to a Type-C pin or an LTG pin, and the portion SW1A controls the two power switches Q1 and Q2 to turn off or on.

9. The charging apparatus supporting a bidirectional switching circuit according to claim 8, wherein the power supply pin 1 is connected to the power switch Q1, the power switch Q1 is connected to the LTG pin 1, and the LTG pin 5 is grounded;
the power supply pin 1 is connected to one end of the resistor R1, and the other end of the resistor R1 is separately connected to a pin of the power switch Q1 and a pin of the portion SW1A of the transfer switch;
the power supply pin 1 is connected to the power switch Q2, the power switch Q2 is connected to the Type-C pin 1, and the Type-C pin 5 is grounded; and
the power supply pin 1 is connected to one end of the resistor R3, the other end of the resistor R3 is separately connected to a pin of the power switch Q2 and a pin of the portion SW1A of the transfer switch, another pin of the portion SWIA is connected to one end of the resistor R2, and the other end of the resistor R2 is grounded.

10. The charging apparatus supporting a bidirectional switching circuit according to claim 5, wherein the power supply pin 2 is separately connected to the LTG pin 3 and the Type-C pin 3.

11. The charging apparatus supporting a bidirectional switching circuit according to claim 5, wherein the power supply pin 3 is separately connected to the LTG pin 2 and the Type-C pin 2.

12. The charging apparatus supporting a bidirectional switching circuit according to claim 8, wherein the power supply pin 4 is connected to one end of the portion SW1B of the transfer switch, and another end of the portion SW1B of the transfer switch is separately connected to the LTG pin 4 and the Type-C pin 4.

13. The charging apparatus supporting a bidirectional switching circuit according to claim 7, wherein the power supply pin 4 is connected to a pin on one end of the transfer switch, pins on another end of the transfer switch are respectively connected to the Type-C pin 4, the LTG pin 4, the power switch Q2, and the power switch Q1 in sequence, another pin on the one end of the transfer switch is connected to one end of the resistor R2, and the other end of the resistor R2 is grounded.
